# EUROPEAN PATENT APPLICATION

(11) **EP 2 336 809 A2**
(43) Date of publication of application: **22.06.2011**
(21) Application number: 10195249.7
(22) Date of filing: 15.12.2010
(51) Int. Cl.: G01V 1/36

(54) **Method for Attenuating Interference Noise in Dual-Sensor Seismic Data**

(30) Priority: 16.12.2009 US 653688
(71) Applicant: PGS Geophysical AS, 1366 Lysaker (NO)
(72) Inventor: Brittan, John, Weybridge, Surrey KT13 8SQ (GB)
(74) Representative: Lord, Michael

(57) **Abstract**

A super-gather is constructed by interleaving traces from a hydrophone gather and a geophone gather in seismic data such that traces pertaining to co-located hydrophones and geophones are adjacent to each other. A noise -attenuated super-gather, generated by applying an f-x domain noise identifying and attenuation process to the super-gather, is subtracted from the super-gather to generate a super-gather noise model. A hydrophone gather noise model, generated by removing non-noisy geophone gather traces from the super-gather noise model, is subtracted from the hydrophone gather to generate seismic data with interference noise attenuated.

## Description

### Field of the Invention

This invention relates generally to the field of geophysical prospecting. More particularly, the invention relates to the field of attenuating noise from marine seismic streamer data.

### Description of the Related Art

In the oil and gas industry, geophysical prospecting is commonly used to aid in the search for and evaluation of subsurface earth formations. Geophysical prospecting techniques yield knowledge of the subsurface structure of the earth, which is useful for finding and extracting valuable mineral resources, particularly hydrocarbon deposits such as oil and natural gas. A well-known technique of geophysical prospecting is a seismic survey. In a land-based seismic survey, a seismic signal is generated on or near the earth's surface and then travels downward into the subsurface of the earth. In a marine seismic survey, the seismic signal may also travel downward through a body of water overlying the subsurface of the earth. Seismic energy sources are used to generate the seismic signal which, after propagating into the earth, is at least partially reflected by subsurface seismic reflectors. Such seismic reflectors typically are interfaces between subterranean formations having different elastic properties, specifically sound wave velocity and rock density, which lead to differences in acoustic impedance at the interfaces. The reflected seismic energy is detected by seismic sensors (also called seismic receivers) at or near the surface of the earth, in an overlying body of water, or at known depths in boreholes. The seismic sensors generate signals, typically electrical or optical, from the detected seismic energy, which are recorded for further processing.

The resulting seismic data obtained in performing a seismic survey, representative of earth's subsurface, is processed to yield information relating to the geologic structure and properties of the subsurface earth formations in the area being surveyed. The processed seismic data is processed for display and analysis of potential hydrocarbon content of these subterranean formations. The goal of seismic data processing is to extract from the seismic data as much information as possible regarding the subterranean formations in order to adequately image the geologic subsurface. In order to identify locations in the earth's subsurface where there is a probability for finding petroleum accumulations, large sums of money are expended in gathering, processing, and interpreting seismic data. The process of constructing the reflector surfaces defining the subterranean earth layers of interest from the recorded seismic data provides an image of the earth in depth or time.

The image of the structure of the earth's subsurface is produced in order to enable an interpreter to select locations with the greatest probability of having petroleum accumulations. To verify the presence of petroleum, a well must be drilled. Drilling wells to determine whether petroleum deposits are present or not, is an extremely expensive and time-consuming undertaking. For that reason, there is a continuing need to improve the processing and display of the seismic data, so as to produce an image of the structure of the earth's subsurface that will improve the ability of an interpreter, whether the interpretation is made by a computer or a human, to assess the probability that an accumulation of petroleum exists at a particular location in the earth's subsurface.

The appropriate seismic sources for generating the seismic signal in land seismic surveys may include explosives or vibrators. Marine seismic surveys typically employ a submerged seismic source towed by a ship and periodically activated to generate an acoustic wavefield. The seismic source generating the wavefield may be of several types, including a small explosive charge, an electric spark or arc, a marine vibrator, and, typically, a gun. The seismic source gun may be a water gun, a vapor gun, and, most typically, an air gun. Typically, a marine seismic source consists not of a single source element, but of a spatially-distributed array of source elements. This arrangement is particularly true for air guns, currently the most common form of marine seismic source.

The appropriate types of seismic sensors typically include particle velocity sensors, particularly in land surveys, and water pressure sensors, particularly in marine surveys. Sometimes particle acceleration sensors or pressure gradient sensors are used in place of or in addition to particle velocity sensors. Particle velocity sensors and water pressure sensors are commonly known in the art as geophones and hydrophones, respectively. Seismic sensors may be deployed by themselves, but are more commonly deployed in sensor arrays. Additionally, pressure sensors and particle velocity sensors may be deployed together in a marine survey, collocated in pairs or pairs of arrays.

In a typical marine seismic survey, a seismic survey vessel travels on the water surface, typically at about 5 knots, and contains seismic acquisition equipment, such as navigation control, seismic source control, seismic sensor control, and recording equipment. The seismic source control equipment causes a seismic source towed in the body of water by the seismic vessel to actuate at selected times. Seismic streamers, also called seismic cables, are elongate cable-like structures towed in the body of water by the seismic survey vessel that tows the seismic source or by another seismic survey ship. Typically, a plurality of seismic streamers are towed behind a seismic vessel. The seismic streamers contain sensors to detect the reflected wavefields initiated by the seismic source and reflected from reflecting interfaces. Conventionally, the seismic streamers contain pressure sensors such as hydrophones, but seismic streamers have been utilized that contain water particle velocity sensors such as geophones or particle acceleration sensors such as accelerometers, in addition to hydrophones. The pressure sensors and particle motion sensors are typically deployed in close proximity, collocated in pairs or pairs of arrays along a seismic cable.

Interference noise is an increasingly common problem in seismic data sets. This is true for seismic data being acquired for use in both exploration and production environments, but especially so in the latter. Interference noise has many sources, including as examples, other seismic vessels, and production equipment and installations. Even the natural environment, in the form of earthquakes, can be a source. This diversity of sources has a corresponding diversity of seismic noise characteristics. This means that algorithms dedicated to suppressing the noise within a seismic data set must be highly adaptable in both their identification of the noise and in their preservation of the underlying signal.

Thus, a need exists for a method for attenuating interference noise from marine dual-sensor seismic data that effectively identifies the interference noise for removal.

### BRIEF SUMMARY OF THE INVENTION

The invention is a method for converting seismic data recorded in marine dual-sensor streamers into seismic data with interference noise attenuated. A super-gather is constructed by interleaving traces from a hydrophone gather and a geophone gather in the seismic data such that traces pertaining to co-located hydrophones and geophones are adjacent to each other. A noise-attenuated super-gather, generated by applying an f-x domain noise identifying and attenuation process to the super-gather, is subtracted from the super-gather to generate a super-gather noise model. A hydrophone gather noise model, generated by removing non-noisy geophone gather traces from the super-gather noise model, is subtracted from the hydrophone gather to generate seismic data with interference noise attenuated.

### BRIEF DESCRIPTION OF THE DRAWINGS

The invention and its advantages may be more easily understood by reference to the following detailed description and the attached drawings, in which:

**FIGS**. **1a**, **1b**, and **1c** are three seismic sections illustrating data with interference noise, recorded by hydrophones;

**FIGS. 2a**, **2b**, and **2c** are seismic sections illustrating data, recorded by geophones co-located with the hydrophones in **FIGS. 1a**, **1b**, and **1c**, respectively;

**FIG. 3** is a flowchart illustrating an embodiment of the invention for removing interference noise from marine seismic dual-sensor streamer data;

**FIG. 4** is a flowchart illustrating a further embodiment of the invention for removing interference noise from marine seismic dual-sensor streamer data;

**FIG. 5** is a flowchart illustrating an embodiment of a noise identification and attenuation process for use in the invention,

**FIG. 6** is a seismic section illustrating data with interference noise, recorded by a hydrophone;

**FIG. 7** is a seismic section illustrating data with interference noise, recorded by a geophone co-located with the hydrophone in **FIG. 6**; and

**FIG. 8** is a seismic section illustrating the hydrophone data from **FIG. 6** with interference noise attenuated by the method of the invention.

While the invention will be described in connection with its preferred embodiments, it will be understood that the invention is not limited to these. On the contrary, the invention is intended to cover all alternatives, modifications, and equivalents that may be included within the scope of the invention, as defined by the appended claims.

### DETAILED DESCRIPTION OF THE INVENTION

Marine seismic interference noise includes noise recorded during marine seismic surveys and originating from at least the following two causes. First, interference noise can be caused by the mechanical operations of other entities within the locale of a seismic survey. These other entities would include, for example, rigs, other seismic vessels, and non-seismic vessels. This noise is commonly referred to by the generic term "ship noise". Second, interference noise can be caused by seismic energy generated by a seismic source towed by a seismic vessel which has been backscattered from a surface diffractor and arrives at the streamer during the recording cycle. These surface diffractors would include, for example, a nearby rig. This noise is generally referred to as "backscattered noise".

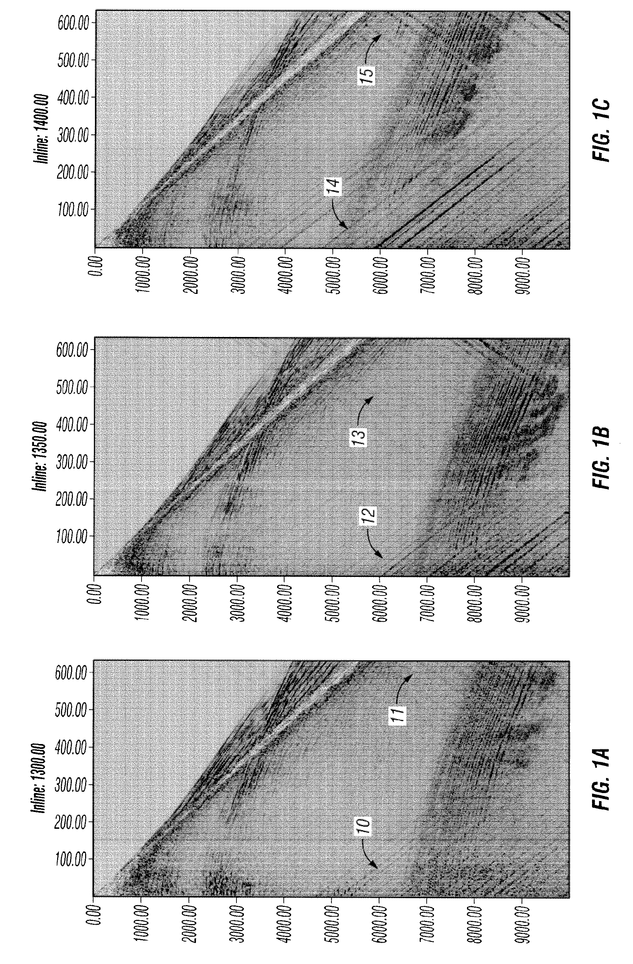

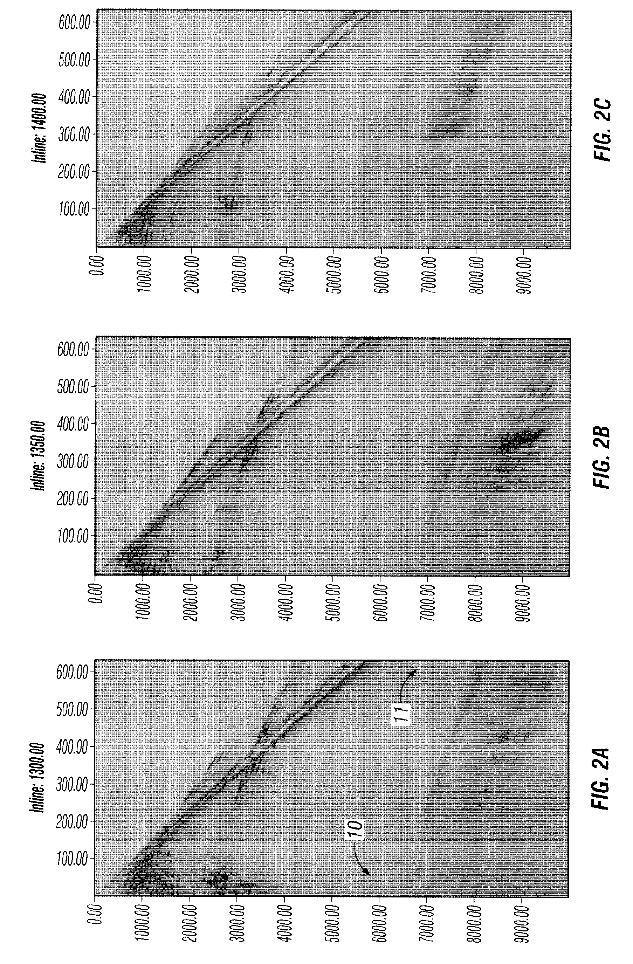

Interference noise often appears on dual-sensor seismic data with different characteristics on different co-located sensors. For example, interference noise often appears differently on the records of co-located hydrophones and geophones. Generally, interference noise generally travels through the water layer in a preferentially horizontal manner. Thus, the interference noise appears much stronger to an omni-directional hydrophone than to a vertically-oriented geophone. An example of this difference in interference noise detected is illustrated in **FIGS. 1a**, **1b**, and **1c** and **FIGS. 2a**, **2b**, and **2c**.

**FIGS. 1a, 1b,** and **1c** are three seismic sections illustrating data with interference noise, recorded by hydrophones. Three typical shots are shown with strong seismic interference noise detected by the omni-directional pressure sensors, the hydrophones. This strong interference noise is indicated at reference points **10, 11, 12, 13, 14** and **15** in **FIGS**. **1a**, **1b**, and **1c**.

**FIGS. 2a, 2b,** and **2c** are three seismic sections illustrating data, recorded by geophones co-located with the hydrophones in **FIGS. 1a, 1b,** and **1c**, respectively. The same three shots shown in **FIGS. 1a, 1b**, and **1c** are illustrated, with, at most, very weak seismic interference noise detected by the vertical velocity sensors, the geophones. For example, there is little interference noise visible in **FIG. 2a** at the areas corresponding to the interference noise at **10** and **11** in **FIG. 1a**. The invention exploits these differences between hydrophone and geophone recorded data characteristics to more effectively attenuate the seismic interference noise.

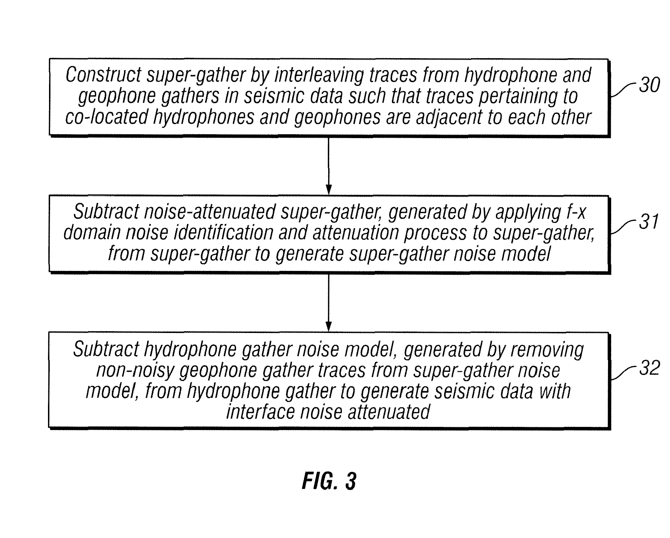

**FIG. 3** is a flowchart illustrating an embodiment of the invention for removing interference noise from marine seismic dual-sensor streamer data.

At block **30**, a super-gather is constructed by interleaving traces from a hydrophone gather and a geophone gather in the seismic data such that traces pertaining to co-located hydrophones and geophones are adjacent to each other.

At block **31**, a noise-attenuated super-gather, generated by applying an f-x domain noise identifying and attenuation process to the super-gather, is subtracted from the super-gather to generate a super-gather noise model.

At block **32**, a hydrophone gather noise model, generated by removing non-noisy geophone gather traces from the super-gather noise model, is subtracted from the hydrophone gather to generate seismic data with interference noise attenuated.

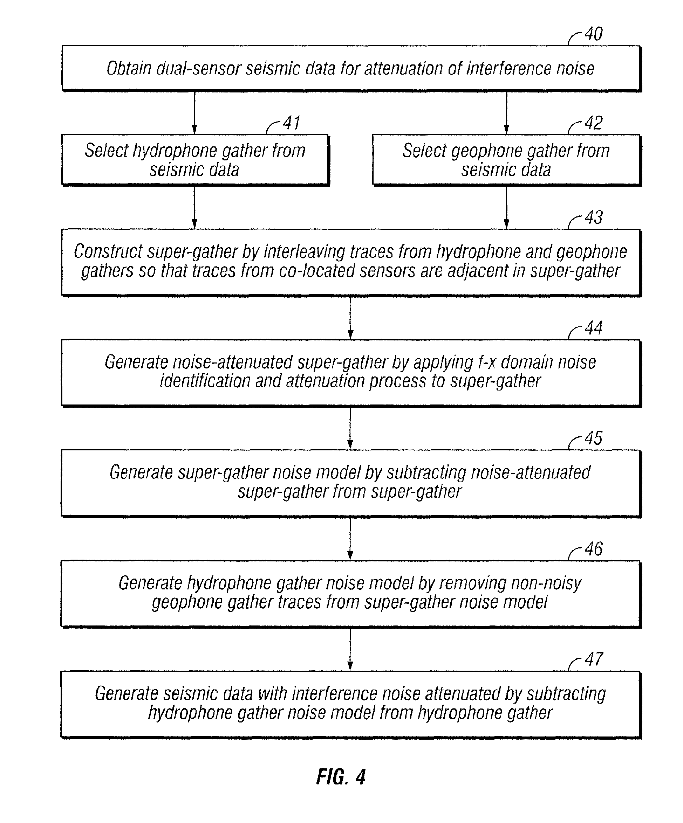

**FIG. 4** is a flowchart illustrating a further embodiment of the invention for removing interference noise from marine seismic dual-sensor streamer data. **FIG. 4** illustrates a more detailed version of the embodiment presented in **FIG. 3** above.

At block **40**, seismic data are obtained for attenuation of interference noise. The seismic data is marine dual-sensor seismic data that has been acquired using towed streamers. The dual-sensor seismic data is acquired from concurrently recorded, collocated pressure sensors and particle motion sensors on the towed streamers.

The invention will be illustrated here with the pressure sensors being hydrophones and the particle motion sensors being vertical velocity sensors, in particular, geophones. Thus, in this exemplary embodiment, the seismic data set comprises hydrophone data and geophone data. However, the invention is not limited to these sensor types. For example, the particle motion sensors could be particle acceleration sensors, in particular, accelerometers. Hydrophones and geophones will be used for illustrative purposes only.

Hydrophones and geophones do not mechanically respond to corresponding physical effects of pressure and particle velocity, respectively, from a passing seismic wave with signals of the same amplitude. Differences in signal response between hydrophones and geophones are due to different transduction constants or phone responses for the different sensors determining the conversion of the detected mechanical effect into an electrical signal. Hydrophones and geophones also do not physically couple to the surrounding media with the same efficiency.

The hydrophone data and geophone data are adjusted or filtered to compensate for intrinsic differences in their response to the seismic signal, if the responses are not matched. These response differences and their corrective filters are well known in the art of seismic data processing. These response differences include, but are not limited to, differences between hydrophones and geophones regarding their transduction, phone response, and coupling efficiency. Any such filters may be applied to either one or both of the hydrophone and geophone signals, as is well known in the art.

At block **41,** a hydrophone gather is selected from the hydrophone data in the seismic data obtained in block **40.** Similarly, at block **42**, a geophone gather is selected from the geophone data in the seismic data obtained in block **40**. The geophone gather is selected to correspond to the hydrophone gather selected in block **41** in that the two gathers contain hydrophone and geophone traces, respectively, that are concurrently recorded from collocated sensors.

At block **43,** a super-gather is constructed from the hydrophone gather and the geophone gather selected in blocks **41** and **42**, respectively. The super-gather is constructed by interleaving traces from the hydrophone gather with traces from the geophone gather such that traces pertaining to co-located hydrophones and geophones are adjacent to each other in the super-gather.

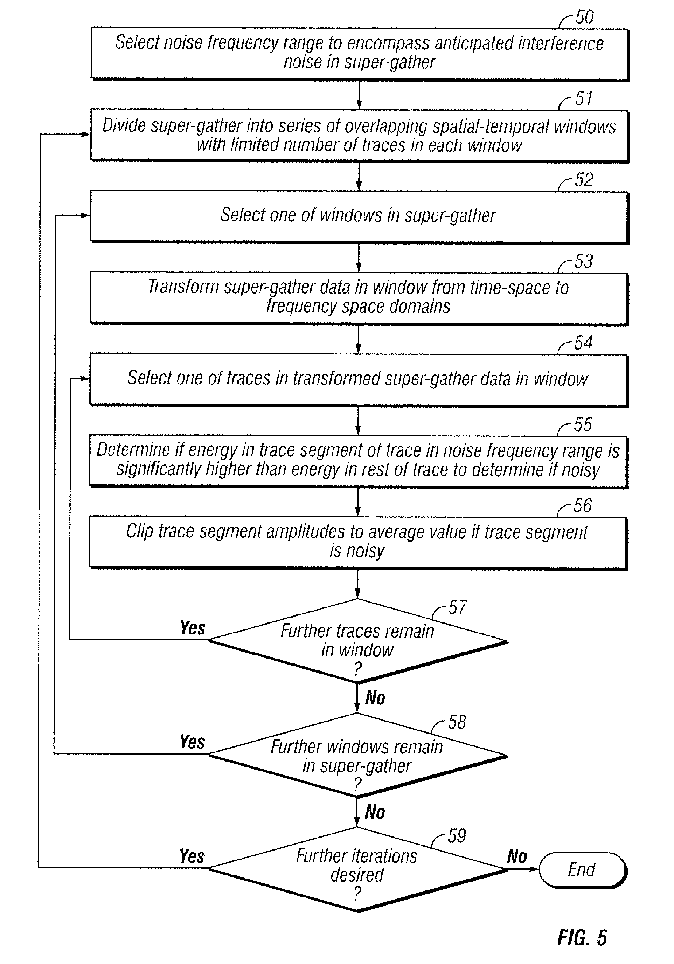

At block **44**, a noise-attenuated super-gather is generated by applying an f-x domain noise identifying and attenuation process to the super-gather of interleaved traces. The process identifies noisy trace segments, clips the amplitudes of the affected frequencies, applies iterative f-x prediction filtering, and replaces the trace segments with their filtered versions. The non-noisy traces are left unchanged. The seismic interference noise should appear to be highly incoherent on the interleaved gathers and thus will be specifically identified by the process for attenuation, insuring that interference noise is attenuated while the signal is preserved. This noise attenuation process is described in more detail below in the discussion in reference to the flowchart in **FIG. 5**.

At block **45**, a super-gather noise model is generated by subtracting the noise-attenuated super-gather from block **44** from the original super-gather from block **43**. The super-gather noise model substantially comprises (in principle) the noisy traces contained in the original hydrophone and geophone gathers. At block **46**, a hydrophone gather noise model is generated by removing the non-noisy geophone gather traces from the super-gather noise model from block **45.** This process essentially separates the super-gather, in the form of the current super-gather noise model, into the geophone gather and the hydrophone gather, in the form of the current hydrophone gather noise model. The hydrophone gather noise model substantially comprises (in principle) the noisy traces, those traces containing the seismic interference noise, from the original hydrophone gather.

At block **47**, seismic data with interference noise attenuated is generated by subtracting the hydrophone gather noise model from block **46** from the original hydrophone gather from block **40.** The subtraction can be done in any appropriate manner. The manner of subtraction includes, but is not limited to, straight subtraction, adaptive subtraction using least squares filters in user-defined time and space windows, adaptive subtraction based on an L¹ norm, and a pattern recognition based method.

In adaptive subtraction, a set of filters is designed, based on the selected window length and filter length. Here, the filters are convolve d with the hydrophone gather noise model and then the convolution is subtracted from the hydrophone gather. The total energy of the resulting noise attenuated seismic data will be minimized, in the least square sense, when the filters are properly determined.

In an exemplary embodiment, the hydrophone gather and the hydrophone gather noise model are split up into separate windows. The windows may each have user-specified time and space window lengths. In an exemplary embodiment, the windows overlap each other by about 50% of the window length in the time or space direction. Thus, each time sample (apart from the top, bottom, left hand, and right hand edges of a trace gather) will be copied into four windows. Then, in some embodiments, a cosine squared taper is applied in each window to the samples from the center of the gather upward and downward (in the time direction) and leftward and rightward (i.e., in the positive x space direction).

The least squares filter determination is done on a window-by-widow basis with the results independent from window to window. Thus, the overlapping sections are copied out multiple times, multiply filtered and then summed together at the end. In one such embodiment, the filters for each window are least squares Wiener filters, which are calculated in a conventional manner using the Wiener-Levinson algorithm. The optimum filters are temporal convolution filters that may vary from window to window. When the filters are determined and the energy in each window is minimized, then the result represents seismic data having minimum interference noise.

**FIG. 5** is a flowchart illustrating an embodiment of a noise identification and attenuation process for use in the invention. This is the process applied to the super-gather of block **43** of **FIG. 4** to generate a noise-attenuated super-gather in block **44** of **FIG. 4**, above. This process includes detection of noisy trace segments, and replacement of those segments with the f-x filtered version in each iteration, while non-noisy trace segments are kept as they are.

At block **50**, a noise frequency range is selected to encompass the frequency range of the interference noise anticipated in the super-gather from block **43** of **FIG. 4****.**

At block **51**, the super-gather is divided into a series of overlapping spatial-temporal windows with a limited number of traces in each window. At block **52,**one of the spatial-temporal windows from block **51** is selected.

At block **53**, the super-gather data in the spatial temporal window selected in block **52** is transformed from the time-space domain to the frequency-space domain. At block **54**, one of the traces in the transformed super-gather data from block **53** in the window selected in block **52** is selected.

At block **55**, the transformed super-gather data in the trace selected in block **54** is examined for interference noise. The energy in the trace segment within the noise frequency range is compared with the energy of the rest of the trace segments outside the noise frequency range to see if the former energy is significantly higher than the latter energy. If the energy in the trace segment in the noise frequency range is significantly higher, then the trace segment is designated as noisy. Otherwise, the trace segment is designated as non-noisy.

At block **56**, the trace segment amplitudes in a noisy trace segment are clipped to an average value. The clipping is only done in the noise frequencies range. The trace segment amplitudes in non-noisy trace segments are not changed.

At block **57**, it is determined if further traces remain within the selected window, If traces remain, then the process returns to block **54** to select another trace. If no traces remain, then the process continues to block **58**.

At block **58**, it is determined if further windows remain within the super-gather, If windows remain, then the process returns to block **52** to select another window. If no windows remain, then the process continues to block **59**.

At block **59**, it is determined if further iterations of the process is desired. If further iterations are desired, then the process returns to block 51 where the super-gather with interference noise attenuated is f-x filtered again.

This process is a type of f-x prediction error filtering. After the first iteration of f-x prediction filtering, the trace segments that were classified as noisy are replaced by their filtered versions. In each succeeding iteration, the prediction error filters are recalculated and will be better filters since the noise has been partially attenuated. Further, these better prediction error filters will be applied to cleaner data to predict the noise traces such that the results will gradually improve. The number of iterations that are needed depends on the data, in particular the number of noisy traces, but is typically small.

In one embodiment, the iterative f-x prediction error filtering uses separate, transient-free forward and backward prediction filters in each iteration, and the results are averaged. The exceptions are the first traces in each window, where only the backward prediction is used, and the last traces, where only the forward prediction is used. In an alternative embodiment, simultaneous minimization of the forward and backward prediction errors is employed.

In a further embodiment, the iterative f-x prediction filtering is applied in a cascaded fashion to the same gather or other types of gathers for further noise attenuation.. In one exemplary embodiment, the iterative f-x prediction filtering is first applied to a shot gather. The remaining noise is mainly present in the traces that were identified as non-noisy traces. The iterative f-x prediction filtering is then reapplied to a receiver gather.

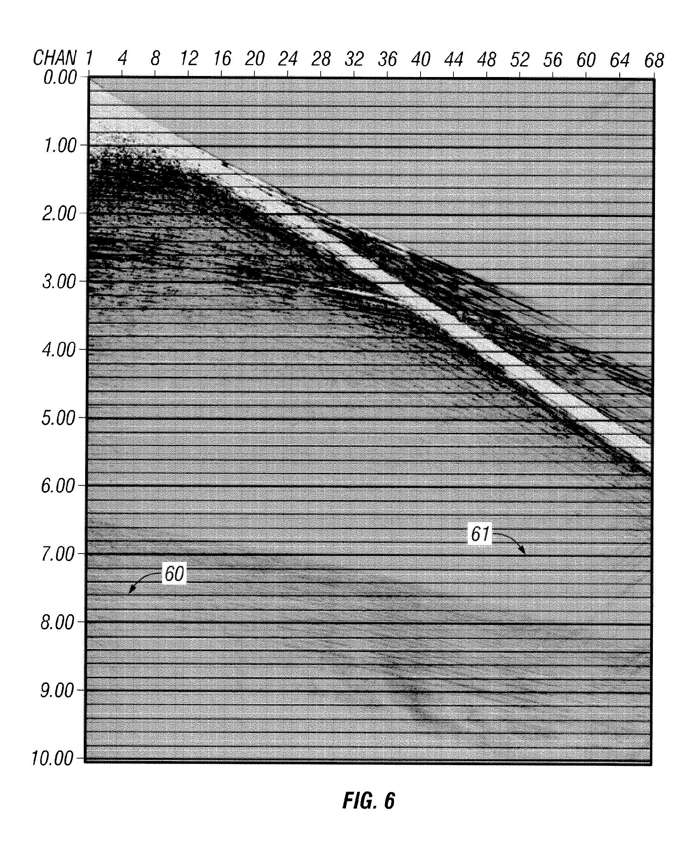

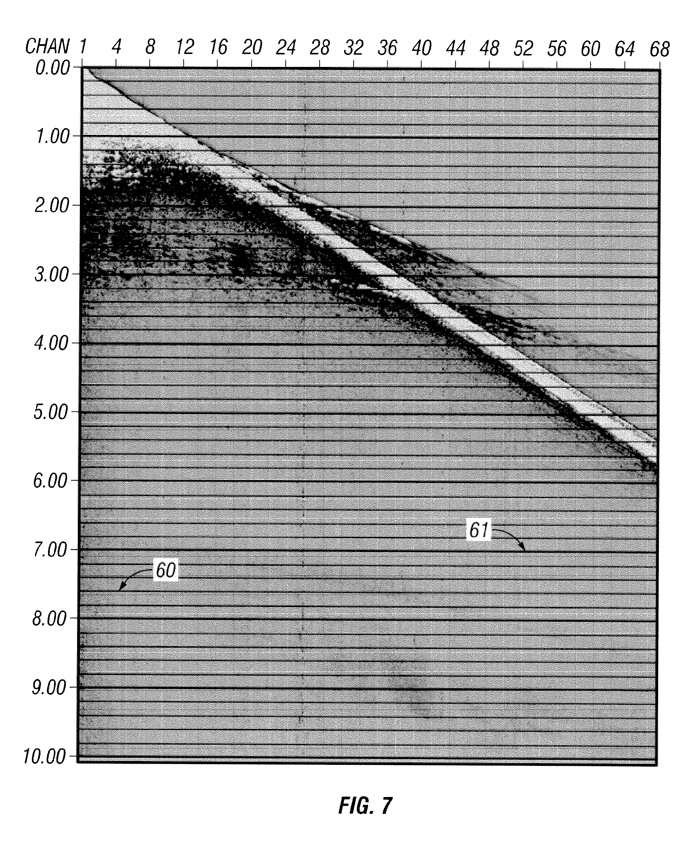

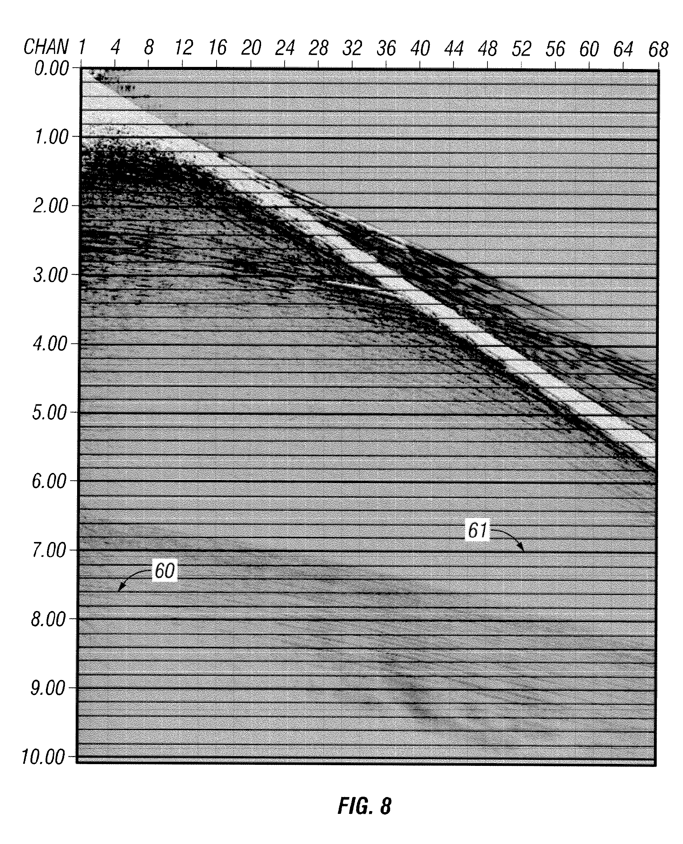

**FIGS. 6****,** **7** and **8** illustrate the effectiveness of the method of the invention for attenuating interference noise in dual-sensor seismic data. **FIG. 6** is a seismic section illustrating data with interference noise, recorded by a hydrophone. The interference noise is indicated at reference points **60** and **61**. **FIG. 7** is a seismic section illustrating data with interference noise, recorded by a geophone co -located with the hydrophone in **FIG. 6**. Again, there is little interference noise visible in **FIG. 7** at the areas corresponding to the interference noise at **60** and **61** in **FIG. 6****.** **FIG. 8** is a seismic section illustrating the hydrophone data from with the interference noise attenuated by the method of the invention. The interference noise in the areas corresponding to the interference noise at **60** and **61** in **FIG. 6** is now substantially attenuated.

The invention has been discussed above as a method, for illustrative purposes only, but can also be implemented as a system. The system of the invention is preferably implemented by means of computers, in particular digital computers, along with other conventional data processing equipment. Such data processing equipment, well known in the art, will comprise any appropriate combination or network of computer processing equipment, including, but not be limited to, hardware (processors, temporary and permanent storage devices, and any other appropriate computer processing equipment), software (operating systems, application programs, mathematics program libraries, and any other appropriate software), connections (electrical, optical, wireless, or otherwise), and peripherals (input and output devices such as keyboards, pointing devices, and scanners; display devices such as monitors and printers; computer readable storage media such as tapes, disks, and hard drives, and any other appropriate equipment).

In another embodiment, the invention could be implemented as the method described above, specifically carried out using a programmable computer to perform the method. In another embodiment, the invention could be implemented as a computer program stored in a computer readable medium, with the program having logic operable to cause a programmable computer to perform the method described above. In another embodiment, the invention could be implemented as a computer readable medium with a computer program stored on the medium, such that the program has logic operable to cause a programmable computer to perform the method described above.

It should be understood that the preceding is merely a detailed description of specific embodiments of this invention and that numerous changes, modifications, and alternatives to the disclosed embodiments can be made in accordance with the disclosure here without departing from the scope of the invention. The preceding description, therefore, is not meant to limit the scope of the invention. Rather, the scope of the invention is to be determined only by the appended claims and their equivalents.

## Claims

1. A method for converting seismic data recorded from marine dual-sensor streamers into seismic data with interference noise attenuated, comprising:
using a programmable computer to perform the following:
constructing a super-gather by interleaving traces from a hydrophone gather and a geophone gather in the seismic data such that traces pertaining to co-located hydrophones and geophones are adjacent to each other;
subtracting a noise -attenuated super-gather, generated by applying an f-x domain noise identifying and attenuation process to the super-gather, from the super-gather to generate a super-gather noise model; and
subtracting a hydrophone gather noise model, generated by removing non-noisy geophone gather traces from the super-gather noise model, from the hydrophone gather to generate seismic data with interference noise attenuated.

2. The method of claim **1**, wherein the constructing a super-gather comprises:
obtaining the seismic data recorded from the marine dual-sensor streamers, wherein the seismic data comprises hydrophone data and geophone data; and
using a programmable computer to perform the following:
selecting a hydrophone gather from the hydrophone data in the obtained seismic data;
selecting a geophone gather from the geophone data in the obtained seismic data; and
constructing a super-gather by interleaving traces from the selected hydrophone gather with traces from the selected geophone gather such that traces pertaining to co-located hydrophones and geophones are adjacent to each other in the super-gather.

3. The method of claim **2**, wherein the subtracting a noise -attenuated super-gather comprises:
generating a noise-attenuated super-gather by applying an f-x domain noise identifying and attenuation process to the super-gather; and
generating a super-gather noise model by subtracting the noise-attenuated super-gather from the super-gather.

4. The method of claim **3**, wherein the subtracting a hydrophone gather noise model comprises:
generating a hydrophone gather noise model by removing non-noisy geophone gather traces from the super-gather noise model; and
generating seismic data with interference noise attenuated by subtracting the hydrophone gather noise model from the hydrophone gather.

5. The method of claim **1**, wherein the f-x domain noise identifying and attenuation process comprises:
selecting a noise frequency range to encompass the interference noise anticipated in the super-gather;
dividing the super-gather into a series of overlapping spatial-temporal windows with a limited number of traces in each window;
performing the following for each window:
transforming the super-gather data in the spatial temporal window from the time-space domain to the frequency-space domain;
performing the following for each trace in the transformed super-gather data in the window
designating a trace segment in the noise frequency range in the trace as noisy if the energy in the trace segment is significantly higher than the rest of the trace;
clipping the trace segment amplitudes in a noisy trace segment to an average value.

6. The method of claim **5**, wherein the f-x domain noise identifying and attenuation process is iteratively performed.

7. The method of claim **1**, wherein the subtracting the hydrophone gather noise model from the hydrophone gather is done by a method selected from the group comprising straight subtraction, adaptive subtraction, and pattern recognition methods.

8. The method of claim **7**, wherein the adaptive subtraction uses least squares filters in user-defined time and space windows.

9. The method of claim **7**, wherein the adaptive subtraction is based on an L¹ norm.

10. A computer readable medium with a computer program stored thereon, the program having logic operable to cause a programmable computer to perform steps comprising:
constructing a super-gather by interleaving traces from a hydrophone gather and a geophone gather in the seismic data such that traces pertaining to co-located hydrophones and geophones are adjacent to each other;
subtracting a noise -attenuated super-gather, generated by applying an f-x domain noise identifying and attenuation process to the super-gather, from the super-gather to generate a super-gather noise model; and
subtracting a hydrophone gather noise model, generated by removing non-noisy geophone gather traces from the super-gather noise model, from the hydrophone gather to generate seismic data with interference noise attenuated.

11. The medium of claim **8**, wherein the constructing a super-gather comprises:
selecting seismic data for attenuation of interference noise, wherein the seismic data comprises hydrophone data and geophone data;
selecting a hydrophone gather from the hydrophone data in the selected seismic data;
selecting a geophone gather from the geophone data in the selected seismic data; and
constructing a super-gather by interleaving traces from the hydrophone gather with traces from the geophone gather such that traces pertaining to co-located hydrophones and geophones are adjacent to each other in the super-gather.

12. The medium of claim **8**, wherein the subtracting a noise -attenuated super-gather comprises:
generating a noise-attenuated super-gather by applying an f-x domain noise identifying and attenuation process to the super-gather; and
generating a super-gather noise model by subtracting the noise-attenuated super-gather from the super-gather.

13. The medium of claim **8**, wherein the subtracting a hydrophone gather noise model comprises:
generating a hydrophone gather noise model by removing non-noisy geophone gather traces from the super-gather noise model; and
generating interference noise attenuated seismic data by subtracting the hydrophone gather noise model from the hydrophone gather.

14. The medium of claim **8**, wherein the f-x domain noise identifying and attenuation process comprises:
selecting a noise frequency range to encompass the interference noise anticipated in the super-gather;
dividing the super-gather into a series of overlapping spatial-temporal windows with a limited number of traces in each window;
performing the following for each window:
transforming the super-gather data in the spatial temporal window from the time-space domain to the frequency-space domain;
performing the following for each trace in the transformed super-gather data in the window
designating a trace segment in the noise frequency range in the trace as noisy if the energy in the trace segment is significantly higher than the rest of the trace;
clipping the trace segment amplitudes in a noisy trace segment to an average value.

15. The medium of claim **14**, wherein the f-x domain noise identifying and attenuation process is iteratively performed:

16. The medium of claim **8**, wherein the subtracting the hydrophone gather noise model from the hydrophone gather is done by a method selected from the group comprising straight subtraction, adaptive subtraction, and pattern recognition methods.

17. The medium of claim **16**, wherein the adaptive subtraction uses least squares filters in user-defined time and space windows.

18. The medium of claim **16**, wherein the adaptive subtraction is based on an L¹ norm.
